# EUROPEAN PATENT SPECIFICATION

(11) **EP 2 489 604 B1**
(45) Date of publication and mention of the grant of the patent: **18.09.2013**
(21) Application number: 10822920.4
(22) Date of filing: 01.10.2010
(51) Int. Cl.: B65D 47/20, B65D 83/00

(54) **ARRANGEMENT FOR A DROPPER**
ANORDNUNG FÜR EINE TROPFENFLASCHE
AGENCEMENT POUR APPLICATEUR COMPTE-GOUTTES

(30) Priority: 14.10.2009 BR MU8902988 U
(43) Date of publication of application: 22.08.2012
(73) Proprietor: Quimenton, Marcos Antonio, Otirzes Valinhos - SP Cep: 13275-422 (BR)
(72) Inventor: Quimenton, Marcos Antonio, Otirzes Valinhos - SP Cep: 13275-422 (BR)
(74) Representative: Pereira Garcia, João Luís
(86) International application number: PCT/BR2010/000322
(87) International publication number: WO 2011/044647

(56) References cited:
- EP-A1- 1 216 931
- US-A- 3 366 284
- US-A- 3 552 605
- US-B1- 6 875 201

## Description

The present invention refers to a new arrangement for a dropper, notably to an improved container (bottle) for mechanical application of products by drops in the most varied segments, among them the medical and/or pharmaceutical, wherein the container (bottle) presents a basal membrane with ergonomic and mechanic features, with the main quality being to show a precise and user-friendly product.

There are several socio-economic factors that manufacturers and suppliers of products in general, among them manufacturers of containers (bottles) for pharmaceuticals, must take as relevant in the development phase of new products.

The pharmaceutical branch has been showing a significant development over the past few years, bringing great competitiveness to the sector.

The entry of generic drugs and the increased participation of similar drugs incited the battle for the consumer market, drastically affecting the performance of major brands conventionally known as Reference Marks, since the generic strategy is basically to compete by price.

Currently it is known a variety of dropper applicators, especially those that are traditionally used, prepared in glass and/or plastic containers with a dropper bung.

Mainly because of the competitive need to reduce costs among the various companies in the market, these droppers gradually replaced the old dropper applicators, consisting of a glass tube (boron silicate) in the shape of cannula with an elastomeric membrane, in bulbous, at one end, which was responsible for suction/dose of the product.

This relentless pursuit of cost reduction to maintain competitiveness between the companies resulted in products that meet partially the needs and desires of end users, particularly with respect to some demerits described by consumers unhappy with the mandatory obligation imposed on them from having to live with these problems, given the lack of alternatives consistent with the goal of the product cost. In the current state of the art, they are known patent documents that deal with droppers for bottles generally, such as the Brazilian MU 8101994-7, comprising a dropper cover (dropper), made preferably of plastic, adaptive in bottlenecks vials with 28 mm diameter, substantially formed by hollow circular section body, provided with a hollow dropper tip and with a hollow tip for air entrance, used for dosage of drug solutions.

Brazilian MU 8202018-3 refers to a cover carrier seal pin, that combined with the reduction of the dropper bung extension, allows that, regardless of the diameter of the orifice for the outflow of the product, determined by the dosage of the same, the cover of the container can keep the same ratio and external format, thus eliminating completely the need to readjust the machinery and variations of models of caps and bungs in the laboratory stock.

US 6875201 discloses a dropper according to the preamble of claim 1.

Regardless of the features claimed in the above documents and other no less important, which were not related, the quantity of liquid is performed by pressing the body of the bottle, when it is plastic, in order to dispense the drug.

Another important part is represented by droppers of glass containers (bottles), whose quantity of liquid is performed, in most cases, without any mechanical intervention of user, but simply let the container upside down.

In short and in general, products with known droppers, currently on the market, with containers (bottles) of glass or plastic, have some operating disadvantages:
- Containers (bottles), of plastic PET (Polyethylene Terephthalate), PP (Polypropylene), PE (Polyethylene), although they make possible the mechanical dosage, they are a hindrance to convenient and accurate drop, due to the reduced or excessive flexibility of their walls, providing therefore the nozzle (jet) or difficulty in dosage of the product respectively;
- Waste of medication when the occurrence of problems in the dosage, since the product must be disposed;
- Glass containers (bottles) preclude the mechanical dosage, making them less functional;
- Often, the beginning of the dripping is time consuming and the product dispensing is slow;
- Glass containers (bottles) are dangerous to users, in case of breakage, due to fall or any other kind of impact.

In order to solve these cited drawbacks and seeking to rescue the strengths of applicators by dropper, the inventor, after research and studies, has created the arrangement for a dropper of this invention, which presents a plastic container (bottle), produced by the injection process, provided with a membrane of differentiated thickness, providing flexibility to the system, with corrugated area on its internal face, which gives an valve effect (spring), said membrane is sufficient to improve and/or ease the effort required for dripping the liquid in the container (bottle).

The conception herein claimed is able to promote a number of advantages, being the most prevalent:
- Security - as the containers (bottles) are made of plastic, there is no risk of cutting accidents, resulting from the breakage of said container;
- Accuracy - optimal response of pressing the membrane, avoiding waste of product;

- Control - the user controls mechanically the beginning and speed of the dripping, by pressing the membrane;
- Visibility - to be optionally made (injected) of translucent material, it is possible to check the level of product within the container (bottle);
- Cost Reduction - in relation to glass bottles, the invention reduces the costs of production, due to the lower cost of employed technology, lower transportation costs (lighter package) and therefore a lower cost of final packaging;
- With respect to containers (bottles) generated by extrusion or injection/extrusion, they offer a higher standard of quality with stronger productivity;
- Greater flexibility in production scheduling of the containers (bottles), besides increasing the range of possibilities of processors enabled to provide this kind of packaging.

To follow, this innovation is explained with reference to the attached drawings, which are represented of an illustrative and not limiting way:

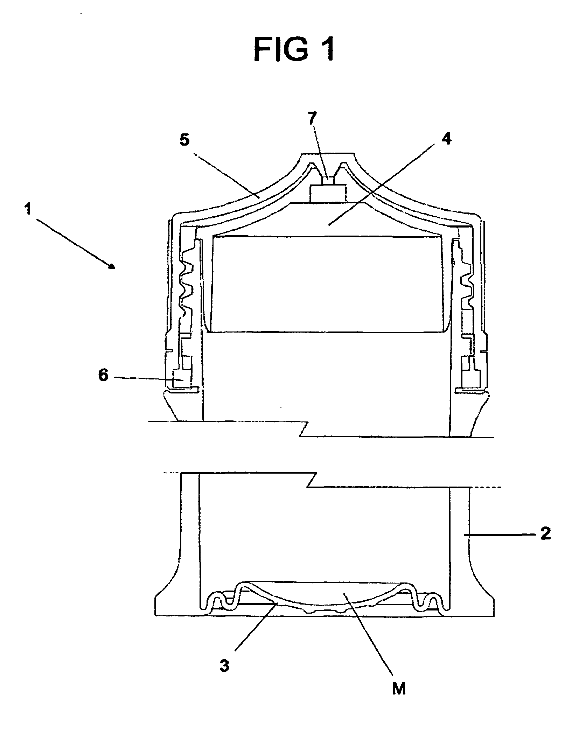

Fig. 1: View in cross section of the arrangement for a dropper;

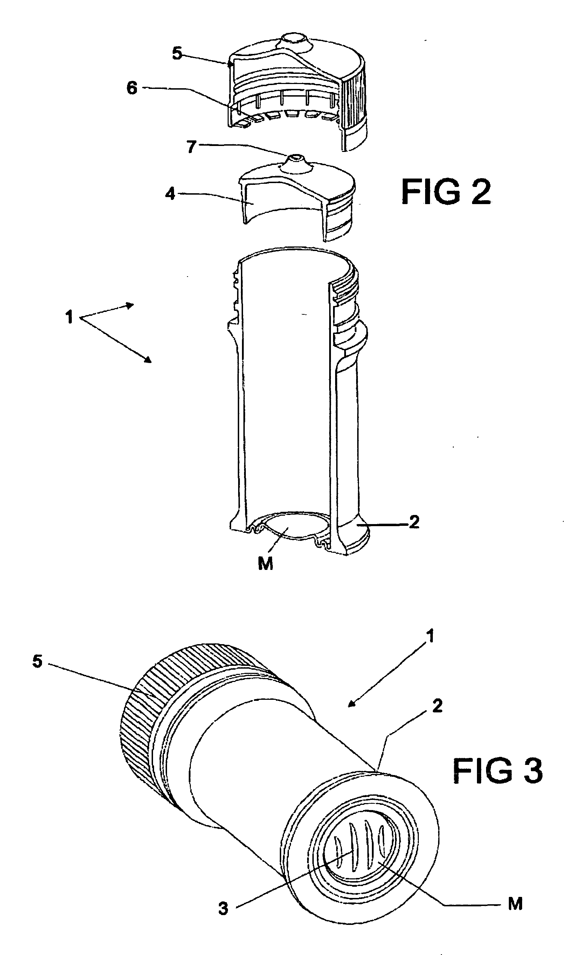

Fig. 2: Partial exploded perspective view of the arrangement for a dropper;
Fig. 3: Inverted perspective view of the arrangement for a dropper;

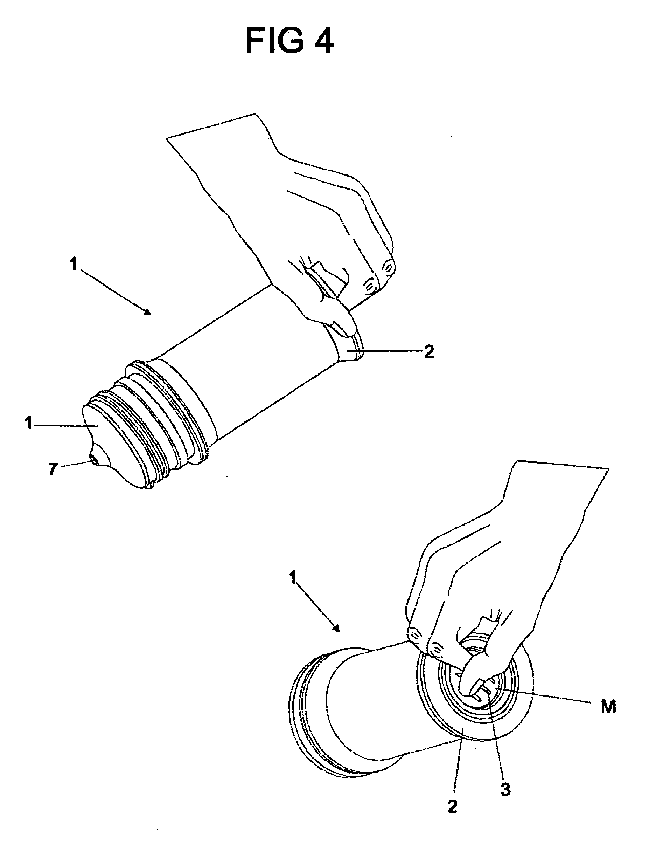

Fig. 4: Perspective view of the arrangement for a dropper, showing its use.

The arrangement for a dropper object of the present invention presents a container (bottle) (1) made of injection-molded plastics, with a base (2) having a membrane (M), with different thickness than the container, allowing the mechanical flexibility, with a corrugated perimeter (3) that causes the membrane (M) to act like a spring, making it considerably easier to actuate and move the liquid mechanically towards the dose dispensing device (4).

This innovation is composed by a container (bottle) (1), a dropper bung (4) and a cover (5) with seal (6) which shows the first opening of the package. The cover (5) can be of any kind, as, for example, screwable, completely removed from the neck, or of Twist Off kind, where there is no need for its total removal from the container (bottle) neck, whose opening is determined by the spin part of the same, typically around 90°, in counterclockwise, and the closing in reverse. The dripping system is greatly simplified; there is no need for vents (air entrances).

With regard to dosage, the shaping the product exit orifice of the dropper has to be adapted to the physical-chemical characteristics of the product being dispensed, a factor which sets the drop size.

More particularly, the dispensing of fluid, after opening the cover (5), occurs by pressing a flexible membrane (M), which has a corrugated perimeter (3) used as flexing spring of said membrane (M), of thickness different from the rest of the container (bottle) (1) body. The nip region is fully protected, since it is in the base (2) of the container (bottle) (1) and set back from the contact surface of the packaging, thus avoiding any accidental starting, either in storage or transportation.

The dropping control is made by pressing the membrane (M) with the finger, usually the thumb or index finger; for this, it should keep the container (bottle) (1) upside down. Therefore, the operation principle is based on compression to the region of the membrane (M), generating an internal pressure differential (pressure increase) which forces the liquid out through the dropper opening (7). So, compression acts directly on the liquid, forcing it against the dropper opening (7), thus keeping the efficiency, even with different internal contents.

## Claims

1. An arrangement for a dropper container, wherein said dropper is made of injection-molded plastic and presents a membrane (M) resulted from the same process of injection, **characterized in that** the membrane has a different thickness than the container and is flexible, with a corrugated perimeter (3), creating a protected nip region in the base (2) of the container (1).

## Patentansprüche

1. **"EINGESETZTE DISPOSITION IN TROPFENZAHL APPLIKATOR":** die Eigenschaft ist das Vorhandensein einer Membran (M) mit differenzierter Dicke und flexibel, welche ein gewellter Bereich dargestellt (3) und ein Bereich des 5 geschützten Druck in die Basis (2) des Behälters (Gefäß) (1) erzeugt, die aus dem Injektionsverfahren entsteht.

## Revendications

1. **"DISPOSITION INTRODUITE DANS UN APPLICATEUR COMPTE-GOUTTES**" **caractérisé par** le fait de présenter une membrane (M) d'épaisseur différenciée et flexible, laquelle présente une surface périmétrale ondulée (3) créant une région de 5 serrage protégée à la base (2) du récipient (flacon) (1), résultantes du même processus d'injection.
